# EUROPEAN PATENT SPECIFICATION

(11) **EP 0 783 633 B1**
(45) Date of publication and mention of the grant of the patent: **20.03.2002**
(21) Application number: 96921044.2
(22) Date of filing: 16.07.1996
(51) Int. Cl.: F15B 19/00, G01M 3/26

(54) **METHOD AND APPARATUS FOR TESTING A FLUID PRESSURE APPARATUS**
VERFAHREN UND VORRICHTUNG ZUM TESTEN VON EINE HYDRAULISCHE VORRICHTUNG
PROCEDE PERMETTANT DE TESTER UN DISPOSITIF HYDRAULIQUE ET APPAREIL CORRESPONDANT

(30) Priority: 26.07.1995 US 507108
(43) Date of publication of application: 16.07.1997
(73) Proprietor: AUTOMOTIVE PRODUCTS (USA) INC., Auburn Hills, Michigan 48326-1754 (US)
(72) Inventor: LAFOUNTAIN, Robert, Henry, Rochester, MI 48063 (US)
(74) Representative: Morrall, Roger
(86) International application number: PCT/IB96/00704
(87) International publication number: WO 97/05395

(56) References cited:
- EP-A- 0 122 976
- WO-A-88/08524
- US-A- 4 051 920
- US-A- 4 959 960
- US-A- 4 993 259
- US-A- 5 471 400

## Description

### Background of the Invention

The present invention relates to hydraulic apparatus in general and more particularly to a hydraulic control apparatus comprising a hydraulic master cylinder and a hydraulic slave cylinder for operating a mechanism remotely located from the master cylinder, the hydraulic control apparatus being prefilled with hydraulic fluid and pretested prior to shipment to a motor vehicle manufacturer for installation in a motor vehicle.

It is known to prefill with hydraulic fluid a motor vehicle clutch control apparatus comprising a master cylinder, a reservoir of hydraulic fluid and a slave cylinder for operating the throw out bearing of a mechanical diaphragm spring clutch. Such prefilled hydraulic control apparatus are shown, for example, in U.S. Patent Nos. 4,407,125, 4,599,860, 4,503,678, 4,506,507, 4,959,960, and 4,993,259, all assigned to the assignee of the present invention.

As is well known, prefilling with hydraulic fluid and pretesting hydraulic apparatus for operating motor vehicle mechanisms such as mechanical clutches presents the many advantages, for the motor vehicle manufacturer, of receiving a fully assembled mechanism comprising all of the components filled with hydraulic fluid and pretested for proper operation ready to install on a motor vehicle on the assembly line without requiring that the components be installed, separately connected by way of a flexible conduit, and filled after installation with hydraulic fluid while being purged of any atmospheric air contained in the apparatus.

Fast, efficient and accurate prefilling and testing of the hydraulic apparatus is critical to the commercialization of such prefilled controlled apparatus. Various filling and testing methods are disclosed in the above-identified patents assigned to applicant's assignee.

Specifically, in U.S. Patent No. 4,407,125, liquid is supplied through the open top of the reservoir until the liquid bleeds out of a bleed port in the slave cylinder whereupon the filling is terminated.

In U.S. Patent Nos. 4,506,507 and 4,503,678, a port is provided in a side wall of the reservoir vacuum is applied to the system through the port to evacuate the system, liquid is introduced into the system through the port, and the port is thereafter sealed with a plug which serves to allow flow of hydraulic fluid out of the reservoir upon excess pressure but prevents reverse flow.

In Patent No. 4,959,960, the apparatus is filled by the use of a filling head which is fitted into the open top of the reservoir and which includes a nozzle portion having an exterior surface enclosing a volume which approximates the volume of the diaphragm so that, following filling of the apparatus, removal of the filling head, and reinsertion of the diaphragm, the apparatus is automatically placed in the totally filled condition. US. Patent No. 4,993,259, the system is closed to substantially preclude escape of hydraulic fluid from the cylinder bore through the conduit means, a predetermined force is applied to the piston to urge the piston to move in the cylinder bore, and the magnitude of the movement of the piston in the cylinder bore in response to the predetermined force is measured to determine the acceptability or unacceptability of the unit under test.

In US Patent No. 4,756,159, a filling and testing apparatus has a valve which alternately connects the pressure chamber of an hydraulic apparatus with a source of vacuum to evacuate the hydraulic apparatus and then to a fluid source to fill the hydraulic apparatus. The integrity of the hydraulic apparatus is checked at the end of the evacuation process by closing the valve to maintain the vacuum and measuring the vacuum over a predetermined period of time using a gauge.

Whereas the filling and testing methods disclosed in these patents have proven to be generally satisfactory, there continues to be a need to improve the apparatus and methodology of filling and testing to provide more reliable, less expensive, and faster filling and testing.

### Summary of the Invention

This invention is directed to the provision of an improved method and apparatus for testing the integrity of a fluid pressure apparatus.

More specifically, this invention is directed to the provision of an improved method and apparatus for filling, and testing the integrity of, a fluid pressure apparatus.

Yet more specifically, this invention is directed to the provision of an improved method and apparatus for prefilling an hydraulic control apparatus.

The invention methodology relates to the testing and filling of a fluid pressure apparatus having a fluid pressure chamber. For example, the fluid pressure apparatus may comprise an hydraulic control apparatus including a slave cylinder; a conduit connected at one end to the inlet port of the slave cylinder; a master cylinder connected at its discharge port to the other end of the conduit; and a reservoir assembly associated with the master cylinder.

According to a first aspect of the invention, there is provided a method of testing the integrity of a fluid pressure assembly having a fluid pressure chamber, the method being characterised by comprising:
gradually varying the mass of fluid in the chamber;
taking readings indicative of the pressure in the chamber at successive times as the mass is varied, whereby to generate successive pressure readings;
creating a signature from the pressure readings; and
comparing the signature to a known, stored signature of a satisfactory assembly, whereby to determine the integrity of the assembly under test.

Preferably the step of gradually varying the mass of fluid in the chamber comprises evacuating air from the chamber to gradually reduce the pressure in the chamber. This evacuation step, which precedes the filling step, is thus utilized to test the integrity of the apparatus.

Preferably the step of gradually varying the mass of fluid in the chamber comprises gradually filling the chamber with a fluid. According to this aspect of the invention methodology, the filling step, which may follow the evacuating step, is utilized to provide a further determination with respect to the integrity of the apparatus.

Preferably the step of gradually varying the mass of fluid in the chamber comprises evacuating air from the chamber to gradually reduce the pressure in the chamber, and thereafter filling the chamber with a fluid; the step of taking readings indicative of the pressure in the chamber at successive times comprises noting a pressure indicative of the pressure in the chamber at successive times as the chamber is evacuated and thereafter noting a pressure indicative of the pressure in the chamber at successive times as the chamber is filled; the step of creating a signature from the pressure readings comprises creating a vacuum signature as the chamber is evacuated and creating a fill signature as the chamber is thereafter filled; and the step of comparing the signature to a known storage signature comprises comparing the vacuum signature to a known stored vacuum signature and thereafter comparing the fill signature to a second known stored fill signature.

According to a further aspect of the invention there is provided an apparatus for testing the integrity of a fluid pressure assembly having a fluid pressure chamber, the apparatus being characterised by comprising:
means for gradually varying the mass of fluid in the chamber,
a transducer operative to sense a pressure indicative of the pressure in the chamber and to generate an output proportioned to the sensed pressure; means operative in response to receipt of the output signal of the transducer to generate a signature representative of the pressure variations in the chamber as the mass is varied; and
means operative to analyse the signature comprising means storing a signature corresponding to an acceptable assembly and means for comparing the stored signature to the generated signature.

### Brief Description of the Drawings

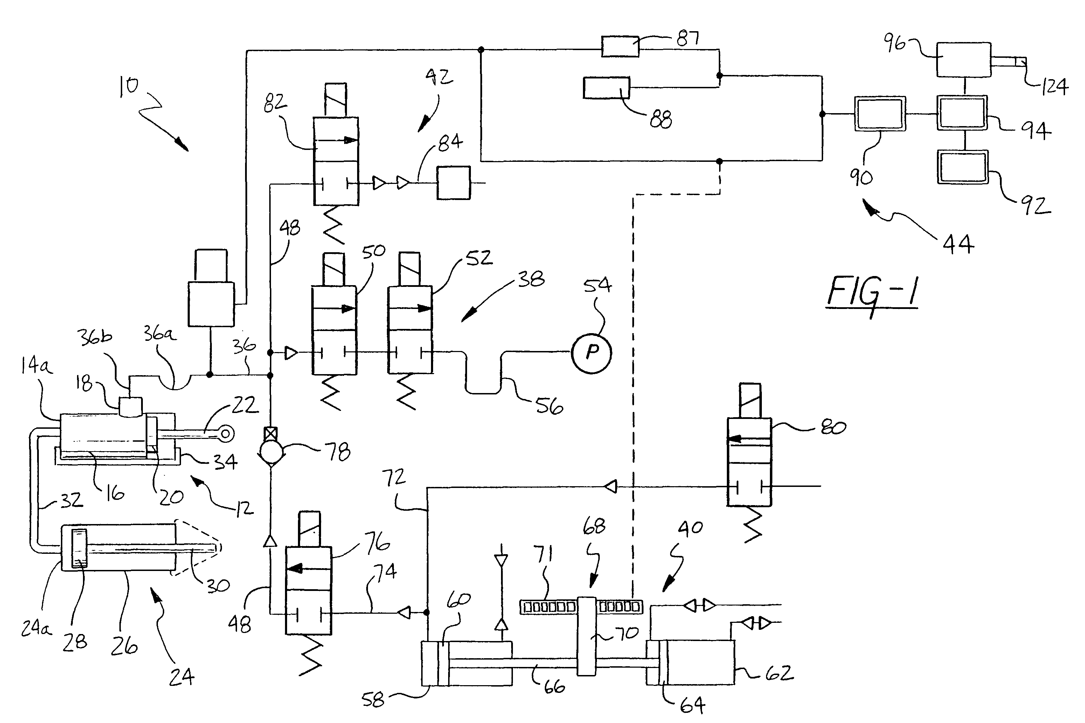

Figure 1 is a schematic view of the invention test apparatus;

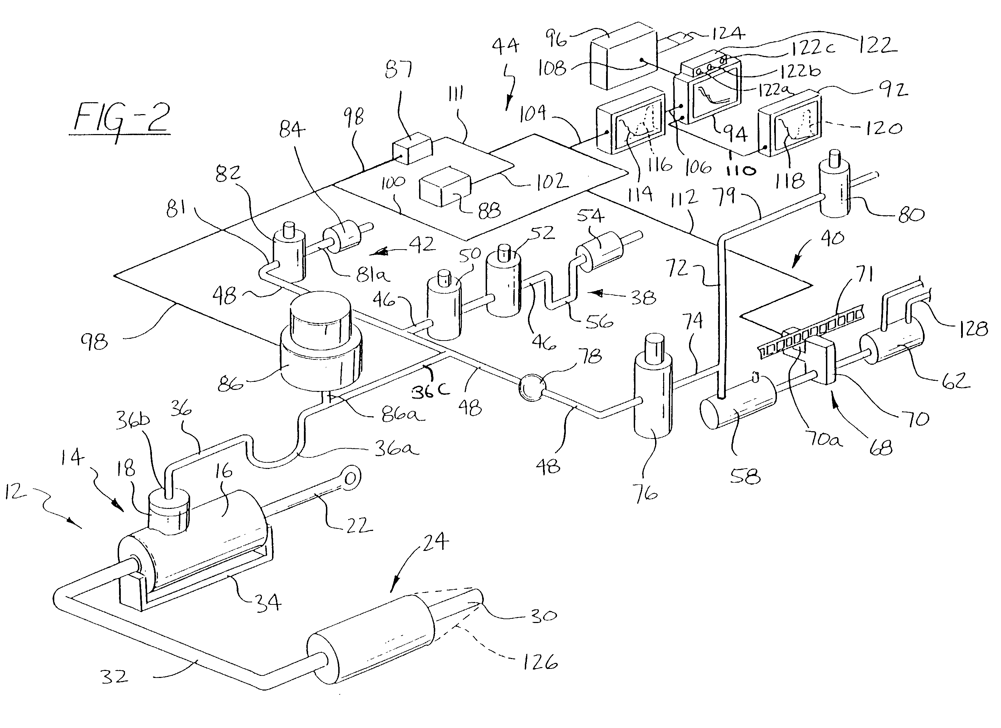

Figure 2 is a perspective somewhat diagrammatic view of the invention test apparatus;
Figures 3 and 4 are vacuum and pressure signatures, respectively, generated by the invention test apparatus; and
Figure 5 is a detail view of an encoder utilized in the invention test apparatus.

### Detailed Description of the Preferred Embodiment

The invention test apparatus 10 is intended for use in filling, and testing the integrity of, a fluid pressure apparatus having a fluid pressure chamber. For example, test apparatus 10 may be utilized to fill and test a hydraulic control apparatus or assembly 12.

Hydraulic apparatus 12 includes a master cylinder 14 including a housing 16, a reservoir 18, a piston 20, and a push rod 22; a slave cylinder 24 including a housing 26, a piston 28, and a push rod 30; and a conduit 32 interconnecting the discharge end 14a of the master cylinder with the intake end 24a of the slave cylinder. Apparatus 12 may comprise, for example, a clutch control apparatus for a motor vehicle in which the apparatus is supplied to a motor vehicle manufacturer in prefilled and pretested form so that the clutch control apparatus is ready for use simply by connecting the push rod 22 to the clutch pedal of the motor vehicle and associating the push rod 30 with a control lever for the clutch throw out bearing.

Test apparatus 10 includes a fixture 34, an evacuate/fill conduit 36 including a trap 36a; an evacuation system 38, a fill system 40, a scavenge system 42, and an evaluation system 44.

Fixture 34 is configured to hold the housing 16 of master cylinder 14 so as to preclude movement of the master cylinder during the test procedure.

Evacuate/fill conduit 36 includes a free or distal end 36b communicating with reservoir 18 and another end 36c.

Evacuation system 38 includes a conduit 46, a conduit 48 connecting with conduit 46 and with the other end 36c of conduit 36, a pair of solenoid valves 50 and 52 interposed serially in conduit 46, a vacuum pump 54 communicating with the distal end of conduit 46, and a trap 56 interposed between solenoid valve 52 and vacuum pump 54.

Fill system 40 includes an oil cylinder 58 including a piston 60, an air cylinder 62 including a piston 64, a connecting rod 66 connecting pistons 60 and 64, a linear incremental optical encoder 68 including a sensor 70 mounted on connecting rod 66 and a fixed optical bar 71 positioned in a gap 70a of the sensor, a conduit 72 communicating with one end of the oil cylinder, a conduit 74 extending between conduit 72 and one end of conduit 48, a solenoid valve 76 in conduit 74, a check valve 78 in conduit 48, a conduit 79 connecting with the upper end of conduit 72, and a solenoid valve 80 interposed in conduit 79.

Scavenge system 42 includes a conduit 81 connected to the other end of conduit 48, a solenoid valve 82 interposed in conduit 81, and a scavenge pump 84 connected to the distal or free end 81a of conduit 81.

Evaluation system 44 includes a transducer 86, an A/D converter 87, a clock 88, a signature generator 90, a computer 92, a comparator 94, a printer 96, and leads 98, 100, 102, 104, 106, 108, 110 and 112.

Transducer 86 may take any of several well known forms and, for example, may comprise a unit available from DCT Instruments of Columbus, Ohio, as Part No. PTG15VB. Transducer 86 includes a probe 86a communicating with test/fill conduit 36 and operative to sense the pressure in the conduit 36 at all times. Transducer 86 functions in known manner to convert the pressure signal sensed by the probe 86a to an output analog electrical signal on lead 98 having a magnitude proportioned to the magnitude of the sensed pressure signal.

A/D convertor 87 receives the analog signal on lead 98 and converts the analog signal in known manner to a corresponding digital signal for further transmission on lead 111.

Clock 88 is at known form and functions to emit a clocking or time pulsed signal at selected periodic intervals.

Signature generator 90 functions to generate a first signature 114 comprising an evacuation or vacuum signature and a second signature 116 comprising a pressure or fill signature 116.

Comparator 94 functions to store signatures corresponding to known satisfactory apparatus 12 and, specifically, stores a first vacuum signature 118 corresponding generally to signature 114 and a second fill signature 120 corresponding generally to fill signature 116. Signatures 118 and 120 are stored in computer 92 by testing a plurality of known satisfactory apparatus 12 to generate satisfactory evacuate and fill signatures.

Comparator 94 receives signatures 114/116 from generator 90 on lead 106 and signatures 118/120 from computer 92 on lead 110, compares the respective signatures and make decisions with respect to the acceptability or unacceptability of the apparatus under test based on the extent to which the signatures generated by generator 90 correspond to the stored signatures in computer 92. A light console 122 on comparator 94 includes a yellow light 122a indicating that a test is in progress, a green light 122b indicating that the unit under test is satisfactory, and a red light 122c indicating that the unit under test is unsatisfactory.

Printer 96 communicates with comparator 94 via lead 108 and functions, upon a signal from comparator 94, to print a detachable label 124 for securement to the defective apparatus. Specifically, when the comparator 94 determines that an apparatus under test is unsatisfactory it generates a signal via lead 108 for transmission to printer 96 whereupon the printer functions to print out a label 124 for securement to the failed apparatus. The information generated by comparator 94 with respect to each failed unit includes not only the fact that the unit has failed but also the specific nature of the defect causing the failure. Label 124 generated by printer 96 embodies a number or letter code identifying the specific defect of the apparatus.

### Operation

In the operation of the invention test apparatus, control apparatus or assembly 12 is received at the test apparatus 10 following assembly of the control assembly 12 in known manner on a production line basis. As each control assembly 12 is received at the test station, the master cylinder 14 of the assembly is fixedly secured in the fixture 34, the distal end 36b of evacuate/fill conduit 36 is inserted into the reservoir of the master cylinder, and the push rod 30 of the slave cylinder is held in a contracted position by the utilization of, for example, a shipping strap 126.

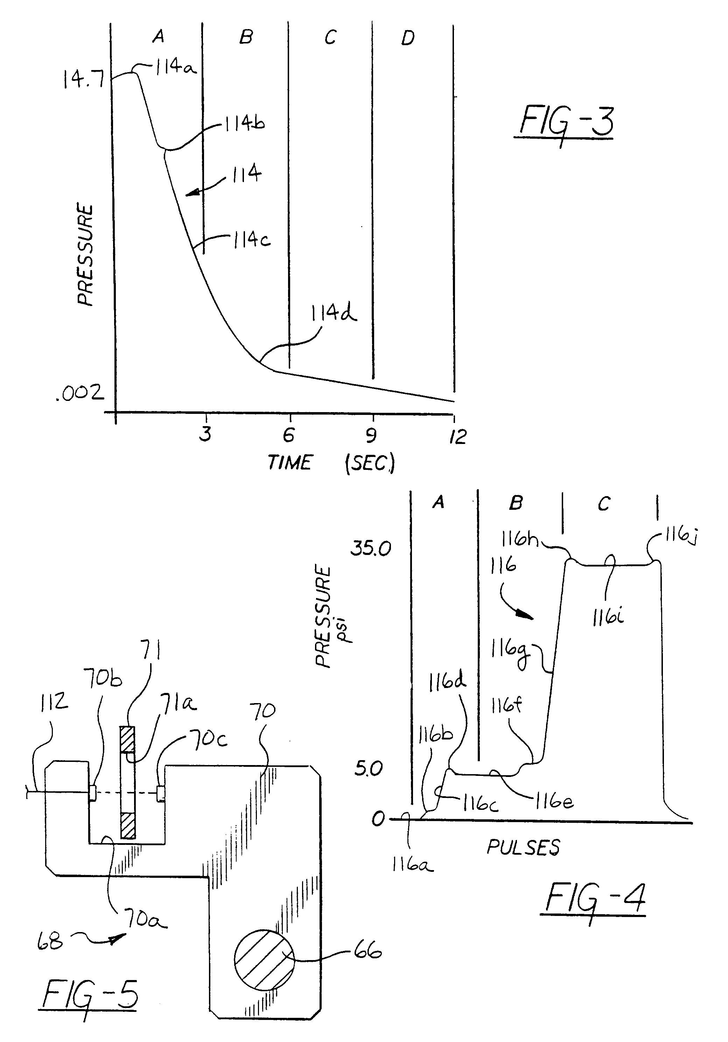

With valves 76 and 82 closed and valves 50 and 52 open, vacuum pump 54 is actuated so as to begin to suck air out of the apparatus 12 via conduits 46, 48 and 36. As the air is sucked out of the pressure chambers of the apparatus 12 the pressure in the conduit drops gradually and this pressure is constantly sensed by transducer 86 so that transducer 86 generates a continuous but gradually dropping analog electrical signal on lead 98 for transmittal to A/D convertor 87 where the analog signal on line 98 is converted to a corresponding digital signal whereafter the digital signal is mixed with a clock signal on line 102 and the combined signal is fed to generator 90 to generate vacuum signature 114, best seen in Figure 3.

In overview, signature 114 comprises a plot of pressure versus time, begins at approximately atmospheric or 14.7 psi, and gradually drops as air is exhausted from the pressure chambers of the apparatus 12, reaching a final value of approximately .002 psi after a time lapse of for example 12 seconds.

Critical and telltale points on the signature curve include the shape of the entry knee 114a, the location of the outgassing blip 114b (indicating the release of volatiles or air trapped in pores of the cylinders under test), the slope of the signature line in the region 114c, and the specific location of the diffusion point 114d (the point at which there is no longer enough pressure in the system to push air out). The vacuum signature is transmitted in progress by lead 106 to comparator 94 and the comparable portion of the stored vacuum signal 118 in the computer 92 is gradually and simultaneously transmitted via lead 110 to the comparator 94 so that the instantaneous and progressively developing signature from the assembly under test and the stored signature of a proper assembly are gradually and simultaneously displayed and compared.

Although a decision with respect to the acceptability or unacceptability of the assembly under test may be deferred until the full signature has been developed and compared to the full stored signature, it is preferable, in the interest of saving time and money, to compare the two signatures at a plurality of points marking the respective conclusion of local graph sections such, for example, as the graph sections A, B, C and D seen in Figure 3.

Thus the instantaneously generated signature and the stored signature may be compared at the end of graph section A after approximately three seconds of test. If the comparison reveals a discrepancy indicative of a defect, the test is immediately aborted and the test assembly is rejected. The operator is apprised of the rejection by illumination of the red light 122c on the light console 122 and the operator is precluded from releasing the master cylinder 14 from the test fixture 34 until he has performed an act, such as pressing a button or moving a lever, to indicate that he has noticed the red light and has therefore noticed that the unit under test is defective. At the same time that the defect is noted by the comparison taking place in the comparator 94, a signal is transmitted from the comparator to the printer, indicating that a defect has been noted and indicating the precise nature of the defect, and the printer 96 thereupon prints a label 124 indicating by letter or by number the nature of the defect, which label may be detached by the operator and positioned on the defective assembly to facilitate repair of the assembly for subsequent retesting.

If the comparison of sections A of the instantaneous and stored signatures does not reveal a defect, the test is continued and proceeds through section B. At the conclusion of section B, an instantaneous and stored signature are again compared, and a decision is again made with the acceptability or unacceptability of the assembly. This section by section comparison procedure continues until the test has proceeded through all four sections whereupon, assuming that the test assembly has passed at each comparison at the end of each section, the green light 122B is illuminated to apprise the operator that the assembly has passed the vacuum test. At such time as the test assembly is determined to have a defect, the exact nature of the defect may then be ascertained utilizing a lookup table incorporated in the comparator and/or the computer.

Defects that may be identified utilizing signature section A include gross part leaks and blocked or skived tubes or connectors. Defects that may be identified utilizing signature section B include reversed seals in the master cylinder, damaged seals in the master cylinder, missing or wrong components in the master cylinder, defective or damaged pistons in the master cylinder, center feed problems, blocked or skived tubes, fine leaks in the master cylinder, or scratched bores in the master or slave cylinder. Defects that may be identified utilizing signature section C include fine leaks in the slave cylinder and damaged connector seals. Defects that may be identified utilizing signature section D include unknown abnormalities or anomalies and out of tolerance parts.

Once the vacuum test has been completed, and assuming that the test has not been aborted by the detection of a defect in the assembly under test, valves 50 and 52 are closed, valve 76 is opened, and air under pressure is delivered to air cylinder 62 via conduit 128 to move the piston 64 forwardly and thereby move the piston 60 of the oil cylinder forwardly to eject hydraulic fluid out of the oil cylinder. The oil leaving the oil cylinder flows through conduit 72, conduit 74, valve 76, conduit 48, and check valve 78 to conduit 36 and thereafter into the reservoir 18 to begin filling the pressure chambers of the assembly under test.

As the hydraulic fluid flows through conduit 36 into the unit under test, transducer 86 continues to sense the pressure in the conduit 36 and continues to generate an analog signal on lead 98 for transmittal to A/D convertor 87 and transmittal via lead 111 and 104 to generator 90. This signal is mixed with a digital signal on lead 112 from encoder 68 generated by movement of the sensor 70 with connecting rod 66 relative to fixed optical bar 71 as pistons 60 and 54 continue to move forwardly. Specifically, optical bar 71 includes a plurality of equally, linearly spaced slits 71a; sensor 70 includes a diode 70b and a light detector 70c positioned on opposite sides of gap 70a; and the digital signal on lead 112 from encoder 68 is generated every time a beam is completed across the gap 70a between diode 70b and detector 70c by virtue of alignment of the diode and detector with a slit 71a. The fill signature developed during the fill cycle is seen in Figure 4 and comprises a plot of pressure versus pulses of the encoder, which are indicative of the position of piston 60 of fill cylinder 58.

With respect to the fill signature, the analog signal generated by transducer 86 is read periodically in response to triggering from the encoder 68. Specifically, encoder 68 triggers A/D converter 87 to take a reading from transducer 86 every time the encoder ends a unit of movement as sensed by the alignment of the diode/detector 70b, 70c of the sensor with a slit 71a in the optical bar. The plot seen in Figure 4 therefore includes a plurality of points generated at the end of each unit of linear movement of the connecting rod 66 as determined by the movement of sensor 70 with respect to bar 71. The pressure sensed by the transducer 86 during the course of the fill cycle ranges from essentially zero pressure during the initial portion of the cycle to approximately 35 psi at the maximum pressure in the cycle.

Notable and significant points on the fill signature 116 include a flat introductory portion 116a indicating the filling of the conduits leading to the assembly under test; a blip 116b indicating filling of the reservoir of the master cylinder; a steep slope portion 116c indicating movement of the oil through the orifice extending between the reservoir and the bore of the master cylinder; a blip 116d indicating the start of the filling of the master cylinder; a dwell portion 116e indicating continued filling of the master cylinder; a blip 116f indicating the beginning of the filling of the conduit 32; a steep slope portion 116g indicating the continued filling of the conduit; a blip 116h indicating the start of the filling of the slave cylinder; a plateau portion 116i indicating continued filling of the slave cylinder; and a blip 116j indicating the end of the fill cycle, whereafter the pressure falls off sharply and returns essentially to atmospheric.

As with the vacuum signature, comparison of the stored fill signature 120 to the instantaneously generated fill signature 116 may be delayed until the fill cycle has been completed but, preferably, comparisons are made at the end of each of a plurality of signature sections A, B and C and the test is aborted at such time as any one of these comparisons indicates a defect.

At such time as the comparator identifies a defect, either at the conclusion of any one of the sections A, B, or C or at the conclusion of the entire fill cycle, the comparator sends a signal to the printer 96 (to print a label 124 bearing a letter or number identifying the nature of the defect for attachment to the defective assembly under test) and causes the illumination of red light 122C (to apprise the operator that the assembly under test has failed and require the operator to perform a predetermined manual acknowledging operation prior to release of the assembly under test by fixture 34).

Defects that may be identified utilizing fill signature section A includes system integrity, improper reservoir, improper supply hose, reversed or damaged master cylinder seals, center feed problems, missing or improper master cylinder components, and blocked or skived tubes or master cylinder end connectors.

Defects that may be identified utilizing fill signature Section B include improper conduit between master cylinder and slave cylinder, blocked or skived conduits or slave cylinder end connector, and improper connectors.

Defects that may be identified utilizing fill signature section C include improper slave cylinder, reverse seal in the slave cylinder, damaged or defective seal in the slave cylinder, damaged or defective piston in the slave cylinder, and missing or improper components.

Once the fill cycle has been completed, valve 76 is closed, valves 80 and 82 are opened, scavenge pump 84 is actuated, and the pressurized air supply to air cylinder 62 via conduits 128 is reversed. Reversing of the pressurized air supply to air cylinder 62 causes piston 60 to retreat in air cylinder 58; opening of valve 80 allows make-up oil to flow through conduit 79 and 72 to fill in the oil cylinder behind the retreating piston; and the actuation of the scavenge pump in conjunction with the opening of valve 82 allows the scavenge pump to suck residual oil in the system out of the system in preparation for the next test cycle.

If a defect is noted at the end of any of the sections A, B, C or D of the vacuum signature or at the end of any of the sections A, B or C of the fill signature, the test is immediately terminated. The operator is apprised of the failure by virtue of illumination of the red light 122c, and the operator, after acknowledging recognition of the failure by a suitable manual act. releases the master cylinder from the fixture 34 and places the failed apparatus 12 on a conveyor line leading to a rebuild station.

At the rebuild station the operator notes the label on the failed unit and specifically notes the specific letter or number code on the label indicating the specific defect in the unit, whereby to aid the repair person in the repair procedure. Following repair of the unit, the unit is placed again on the main conveyor line leading to the test/fill station where the unit is again tested and filled, and hopefully, passed on for shipment.

In overview, it is intended that the initial vacuum test detect the vast majority of the defective units while the units are still in a dry and therefore reusable condition, and that the subsequent pressure test detect those few defective units that were not detected by the vacuum test so that only a small percentage of the defective units that are ultimately detected comprise wet units that must be discarded.

The invention method and apparatus will be seen to provide many important advantages. Specifically, as compared to other systems employed by the assignee of the present invention for testing and filling, the test is quicker and, in fact, reduces the total evacuate and fill time by approximately 50%; the apparatus required to perform the testing is smaller and therefore takes up less space on the floor of the manufacturing and testing facilities; the test is more accurate since it involves a double test wherein the vast majority of the defective units are detected in the vacuum test and the remaining defective units are detected in the following fill test; since the vast majority of the defective units are detected in the vacuum test before they have been filled, only a few of the defective units are detected after filling and therefore only a few of the defective units have to be discarded; the system can be used to find and eliminate problems in the overall procedure rather than to simply detect bad units and as such provides a means of refining and improving the assembly process rather than simply a means of eliminating bad units resulting from the assembly process; and the fixturing required to hold the units under test is greatly improved and specifically is smaller, simpler, lends itself to modular fixturing, and provides easier loading of the units into the fixtures.

Although a preferred embodiment of the invention has been illustrated and described in detail it will apparent that various changes may be made in the disclosed embodiment without departing from the scope of the invention. For example, although the invention has been illustrated and described for purposes of clarity utilizing an item of comparator hardware to perform the comparison between the instantaneous signatures and the stored signatures, it will be understood that in actual practice the comparison between the instantaneous signatures and the stored signatures may be accomplished in known manner utilizing software.

Further, although the invention has been described with respect to the testing of a hydraulic unit including a master cylinder, a slave cylinder, and an interconnecting conduit, the system is equally applicable to the testing of master cylinder units per se with or without a quick connect coupling as well as slave cylinder units per se with or without a quick connect coupling.

Further, although the invention has been herein described with respect to a test facility at the end of the production line for the hydraulic unit to be tested and filled, the method of the invention may also be applied to systems (such as clutch or brake systems) that have already been incorporated into a motor vehicle in a dry condition as part of the overall motor vehicle assembly process in which case the invention method is used to test and fill the dry units in situ on the vehicle.

In broad overview, the present invention is applicable to the testing and filling of any fluid pressure apparatus having a fluid pressure chamber.

## Claims

1. A method of testing the integrity of a fluid pressure assembly (12) having a fluid pressure chamber, the method being **characterised by** comprising;
gradually varying the mass of fluid in the chamber;
taking readings indicative of the pressure in the chamber at successive times as the mass is varied, whereby to generate successive pressure readings;
creating a signature (114,116) from the pressure readings; and
comparing the signature to a known, stored signature of a satisfactory assembly (118, 120) whereby to determine the integrity of the assembly under test.

2. A method according to claim 1 **characterised in that** the step of gradually varying the mass of fluid in the chamber comprises evacuating air from the chamber to gradually reduce the pressure in the chamber.

3. A method according to claim 1 **characterised in that** the step of gradually varying the mass of fluid in the chamber comprises gradually filling the chamber with a fluid.

4. A method according to claim 1 **characterised in that** the step of gradually varying the mass of fluid in the chamber comprises evacuating air from the chamber to gradually reduce the pressure in the chamber and thereafter gradually filling the chamber with a fluid; the step of taking readings indicative of the pressure in the chamber at successive times comprises noting a pressure indicative of the pressure in the chamber at successive times as the chamber is evacuated and thereafter noting a pressure indicative of the pressure in the chamber at successive times as the chamber is filled;
the step of creating a signature from the pressure readings comprises creating a vacuum signature (114) as the chamber is evacuated and creating a fill signature (116) as the chamber is thereafter filled; and
the step of comparing the signature to a known stored signature comprises comparing the vacuum signature (114) to a known stored vacuum signature (118) and thereafter comparing the fill signature (116) to a known stored fill signature.

5. A method according to claim 4 in which the test is aborted prior to the step of filling the chamber with a fluid if the comparison between the vacuum signature (114) and the known stored vacuum signature (118) indicates a defect in the assembly under test.

6. A method according to claim 4 or claim 5 in which the comparison between the vacuum signature (114) and the known stored vacuum signature (118) is carried out periodically during the evacuation of the chamber and the comparison between the fill signature (116) and the known stored fill signature (120) is carried out periodically during the filling of the chamber, the test being aborted at such time as any one of these periodic comparisons indicates a defect in the assembly under test.

7. A method according to any one of claims 1 to 6 **characterised in that** the fluid pressure assembly (12) comprises a hydraulic apparatus including a hydraulic cylinder (14, 24).

8. A method according to claim 7 **characterised in that** the hydraulic cylinder comprises a master cylinder (14) and the assembly further includes a slave cylinder (24) and a conduit (32) interconnecting the master cylinder and the slave cylinder.

9. A method according to any previous claim **characterised in that** the fluid pressure assembly (12) comprises a hydraulic clutch control system for a motor vehicle.

10. A method according to claim 8 and claim 9 **characterised in that** the master cylinder (14) includes a push rod (22) for operative association with a clutch pedal of the motor vehicle, and the slave cylinder (24) includes a push rod (30) for operative association with a release lever for the release bearing of the clutch of the motor vehicle.

11. A method according to any one of claims 1 to 10 **characterised by** the inclusion of the step of generating a reject signal in response to a mismatch of the created signature and the stored signature.

12. A method according to claim 11 **characterised in that** reject signal is coded to indicate a specific defect of the assembly which has given rise to the signature mismatch.

13. A method according to claim 12 **characterised in that** the coded reject signal is transmitted to an associated printer (96) to print a label coded to the specific identified defect.

14. An apparatus (10) for testing the integrity of a fluid pressure assembly (12) having a fluid pressure chamber, the apparatus being **characterised by** comprising:
means (38, 40) for gradually varying the mass of fluid in the chamber;
a transducer (86) operative to sense a pressure indicative of the pressure in the chamber and to generate an output signal proportioned to the sensed pressure;
means (90) operative in response to receipt of the output signal of the transducer to generate a signature (114, 116) representative of the pressure variations in the chamber as the mass is varied; and means (92, 94) operative to analyse the signature comprising means (92) storing a signature (118, 120) corresponding to an acceptable assembly and means (94) for comparing the stored signature to the generated signature.

15. An apparatus according to claim 14 in which the means for varying the mass of fluid in the chamber comprises a source of vacuum (38).

16. An apparatus according to claim 14 or claim 15 in which the means for varying the mass of fluid in the chamber comprises a source of pressurised fluid (40).

17. An apparatus according to claim 16 when dependent on claim 15 further comprising a conduit (36) having a free end (36b) for connection to a port communicating with the pressure chamber of the fluid pressure assembly (12) and a second end (36c); switch means (50, 52, 76) operative to selectively connect the vacuum source(38) to the second end of the conduit while blocking communication between the fluid source (40) and the second end of the conduit, whereby to evacuate the pressure chamber, or connect the fluid source to the second end of the conduit while blocking communication between the vacuum source and the second end of the conduit, whereby to fill the pressure chamber with fluid.

18. An apparatus as claimed in claim 16 or claim 17 in which the pressurised fluid is the working fluid of the assembly.

19. An apparatus according to any one of claims 16 to 18 **characterised in that** the fluid source (40) comprises a fill cylinder (58) and means (60, 62, 64, 66) operative to eject fluid from the fill cylinder to fill the pressure chamber of the fluid pressure assembly.

20. An apparatus according to claim 19 **characterised in that** the ejecting means (60, 62, 64, 66) includes a rod (66) moveable linearly during ejection of the fluid from the fill cylinder; and the apparatus further includes an encoder (68) sensing the linear movement of the rod and operative to trigger a reading of the transducer output signal at the conclusion of each predetermined increment of rod movement.

21. An apparatus according to claim 20 **characterised in that** the signature generating means (90) generates a fill signature (116) representative of the pressure variations in the chamber during the filling of the pressure chamber in response to the signal of the transducer as triggered by the encoder.

22. An apparatus according to claim 21 **characterised in that** the analysing means (92, 94) comprises means (92) storing a fill signature (120) corresponding to an acceptable assembly and means (94) for comparing the stored fill signature to the generated fill signature (116).

23. An apparatus according to claim 17 **characterised in that** the transducer (86) is operative during the evacuation of the pressure chamber to produce a set of evacuation pressure readings and operative during the filling of the pressure chamber to produce a set of fill pressure readings;
the generating means (90) is operative to generate an evacuation signature (114) in response to receipt of the set of evacuation pressure readings and operative to generate a fill signature (116) in response to receipt of the set of fill pressure readings;
the storage means (92) stores an acceptable evacuation signature (118) and an acceptable fill signature (120) and the comparing means (94) is operative to compare the generated evacuation signature to the stored evacuation signature and compare the generated fill signature to the stored fill signature.

24. An apparatus according to any one of claims 14 to 23 **characterised in that** the apparatus further includes a printer (96); the analysing means (92, 94) is operative in response to a mismatch between the generated signature (114, 116) and the stored signature (118, 120), indicative of a specific defect in the assembly, to generate a reject signal coded to the specific defect for transmission to the printer; and the printer is operative in response to receipt of the coded reject signal to print a label (124) coded to the specific identified defect.

## Patentansprüche

1. Verfahren zum Testen der Unversehrtheit einer Fluiddruckbaugruppe (12), die eine Fluiddruckkammer hat, wobei das Verfahren **dadurch gekennzeichnet ist, daß** es folgendes umfaßt;
allmähliches Verändern der Fluidmasse in der Kammer;
Ablesen von Ständen, die den Druck in der Kammer in aufeinanderfolgenden Zeitpunkten, wenn die Masse verändert wird, anzeigen, wodurch aufeinanderfolgende Druckstände erzeugt werden;
Schaffen einer Signatur (114, 116) aus den Druckständen; und
Vergleichen der Signatur mit einer bekannten, gespeicherten Signatur einer zufriedenstellenden Baugruppe (118, 120), wodurch die Unversehrtheit der getesteten Baugruppe bestimmt wird.

2. Verfahren nach Anspruch 1, **dadurch gekennzeichnet, daß** der Schritt des allmählichen Veränderns der Fluidmasse in der Kammer das Evakuieren von Luft aus der Kammer, um den Druck in der Kammer allmählich zu verringern, umfaßt.

3. Verfahren nach Anspruch 1, **dadurch gekennzeichnet, daß** der Schritt des allmählichen Veränderns der Fluidmasse in der Kammer das allmähliche Füllen der Kammer mit einem Fluid umfaßt.

4. Verfahren nach Anspruch 1, **dadurch gekennzeichnet, daß** der Schritt des allmählichen Veränderns der Fluidmasse in der Kammer das Evakuieren von Luft aus der Kammer, um den Druck in der Kammer allmählich zu verringern, und danach das allmähliche Füllen der Kammer mit einem Fluid umfaßt; der Schritt des Ablesens von Ständen, die den Druck in der Kammer in aufeinanderfolgenden Zeitpunkten anzeigen, das Notieren eines Druckes, der den Druck in der Kammer in aufeinanderfolgenden Zeitpunkten, wenn die Kammer evakuiert wird, anzeigt, und danach das Notieren eines Druckes, der den Druck in der Kammer in aufeinanderfolgenden Zeitpunkten, wenn die Kammer gefüllt wird, anzeigt, umfaßt;
der Schritt des Schaffens einer Signatur aus den Druck-ständen das Schaffen einer Vakuumsignatur (114), wenn die Kammer evakuiert wird, und das Schaffen einer Füllsignatur (116), wenn die Kammer danach gefüllt wird, umfaßt; und
der Schritt des Vergleichens der Signatur mit einer bekannten gespeicherten Signatur das Vergleichen der Vakuumsignatur (114) mit einer bekannten gespeicherten Vakuumsignatur (118) und danach das Vergleichen der Füllsignatur (116) mit einer bekannten gespeicherten Füllsignatur umfaßt.

5. Verfahren nach Anspruch 4, bei dem der Test vor dem Schritt des Füllens der Kammer mit einem Fluid abgebrochen wird, wenn der Vergleich zwischen der Vakuumsignatur (114) und der bekannten gespeicherten Vakuumsignatur (118) einen Defekt in der getesteten Baugruppe anzeigt.

6. Verfahren nach Anspruch 4 oder Anspruch 5, bei dem der Vergleich zwischen der Vakuumsignatur (114) und der bekannten gespeicherten Vakuumsignatur (118) periodisch während der Evakuierung der Kammer ausgeführt wird, und der Vergleich zwischen der Füllsignatur (116) und der bekannten gespeicherten Signatur (120) periodisch während des Füllens der Kammer ausgeführt wird, wobei der Test in einem solchen Zeitpunkt abgebrochen wird, wenn irgendeiner dieser periodischen Vergleiche einen Defekt in der getesteten Baugruppe anzeigt.

7. Verfahren nach irgendeinem der Ansprüche 1 bis 6, **dadurch gekennzeichnet, daß** die Fluiddruckbaugruppe (12) eine hydraulische Vorrichtung mit einem Hydraulikzylinder (14, 24) umfaßt.

8. Verfahren nach Anspruch 7, **dadurch gekennzeichnet, daß** der Hydraulikzylinder einen Geberzylinder (14) umfaßt, und die Baugruppe außerdem einen Nehmerzylinder (24) und eine Leitung (32) enthält, die den Geberzylinder und den Nehmerzylinder miteinander verbindet.

9. Verfahren nach irgendeinem vorhergehenden Anspruch, **dadurch gekennzeichnet, daß** die Fluiddruckbaugruppe (12) ein Hydraulikkupplungs-Steuersystem für ein Kraftfahrzeug aufweist.

10. Verfahren nach Anspruch 8 und Anspruch 9, **dadurch gekennzeichnet, daß** der Geberzylinder (14) eine Stößelstange (22) für eine Wirkverbindung mit einem Kupplungspedal des Kraftfahrzeugs enthält, und der Nehmerzylinder (24) eine Stößelstange (30) für eine Wirkverbindung mit einem Ausrückhebel für das Ausrücklager der Kupplung des Kraftfahrzeugs enthält.

11. Verfahren nach irgendeinem der Ansprüche 1 bis 10, **gekennzeichnet durch** das Einschließen des Schrittes des Erzeugens eines Zurückweisungssignals als Antwort auf ein Nichtzusammenpassen der geschaffenen Signatur und der gespeicherten Signatur.

12. Verfahren nach Anspruch 11, **dadurch gekennzeichnet, daß** das Zurückweisungssignal codiert wird, um einen bestimmten Defekt der Baugruppe anzuzeigen, der Anlaß für das Nichtzusammenpassen der Signaturen gegeben hat.

13. Verfahren nach Anspruch 12, **dadurch gekennzeichnet, daß** das codierte Zurückweisungssignal an einen zugehörigen Drucker (96) übertragen wird, um ein Etikett zu drucken, das mit dem festgestellten bestimmten Defekt codiert ist.

14. Vorrichtung (10) zum Testen der Unversehrtheit einer Fluiddruckbaugruppe (12), die eine Fluiddruckkammer hat, wobei die Vorrichtung **dadurch gekennzeichnet ist, daß** sie folgendes enthält:
eine Einrichtung (38, 40) zum allmählichen Verändern der Fluidmasse in der Kammer;
einen Meßwandler (86), der wirksam ist, um einen Druck zu fühlen, der den Druck in der Kammer anzeigt, und um ein Ausgangssignal zu erzeugen, das zu dem gefühlten Druck proportional ist,
eine Einrichtung (90), die wirksam ist, um auf den Empfang des Ausgangssignals des Meßwandlers anzusprechen, um eine Signatur (114, 116) zu erzeugen, die die Druckänderungen in der Kammer, wenn die Masse geändert wird, darstellt; und eine Einrichtung (92, 94), die wirksam ist, um die Signatur zu analysieren und eine Einrichtung (92), die eine Signatur (118, 120) speichert, die einer akzeptablen Baugruppe entspricht, und eine Einrichtung (94) zum Vergleichen der gespeicherten Signatur mit der erzeugten Signatur umfaßt.

15. Vorrichtung nach Anspruch 14, bei der die Einrichtung zum Ändern der Fluidmasse in der Kammer eine Vakuumquelle (38) aufweist.

16. Vorrichtung nach Anspruch 14 oder Anspruch 15, bei der die Einrichtung zum Ändern der Fluidmasse in der Kammer eine Druckfluidquelle (40) aufweist.

17. Vorrichtung nach Anspruch 16, wenn rückbezogen auf Anspruch 15, ferner mit einer Leitung (36), die ein freies Ende (36b) zwecks Verbindung mit einer mit der Druckkammer der Fluiddruckbaugruppe (12) in Verbindung stehenden Öffnung und ein zweites Ende (36c) hat; einer Schalteinrichtung (50, 52, 76), die wirksam ist, um die Vakuumquelle (38) wahlweise mit dem zweiten Ende der Leitung zu verbinden, während sie die Verbindung zwischen der Fluidquelle (40) und dem zweiten Ende der Leitung blockiert, um dadurch die Druckkammer zu evakuieren, oder um die Fluidquelle mit dem zweiten Ende der Leitung zu verbinden, während sie die Verbindung zwischen der Vakuumquelle und dem zweiten Ende der Leitung blockiert wird, wodurch die Druckkammer mit Fluid gefüllt wird.

18. Vorrichtung nach Anspruch 16 oder Anspruch 17, bei der das Druckfluid das Arbeitsfluid der Baugruppe ist.

19. Vorrichtung nach irgendeinem der Ansprüche 16 bis 18, **dadurch gekennzeichnet, daß** die Fluidquelle (40) einen Füllzylinder (58) und eine Einrichtung (60, 62, 64, 66) aufweist, die wirksam ist, um Fluid von dem Fluidzylinder auszustoßen, um die Druckkammer der Fluiddruckbaugruppe zu füllen.

20. Vorrichtung nach Anspruch 19, **dadurch gekennzeichnet, daß** die Ausstoßeinrichtung (60, 62, 64, 66) eine Stange (66) aufweist, die während des Ausstoßens des Fluids aus dem Fluidzylinder geradlinig bewegbar ist; und die Vorrichtung ferner einen Vercoder (68) enthält, der die geradlinige Bewegung der Stange fühlt und wirksam ist, um einen Stand des Meßwandlerausgangssignals am Abschluß eines jeden vorbestimmten Schrittes der Stangenbewegung auszulösen.

21. Vorrichtung nach Anspruch 20, **dadurch gekennzeichnet, daß** die die Signatur erzeugende Einrichtung (90) eine Füllsignatur (116) erzeugt, die die Druckänderungen in der Kammer während des Füllens der Druckkammer als Antwort auf das Signal des Meßwandlers, wie es durch den Vercoder ausgelöst wird, darstellt.

22. Vorrichtung nach Anspruch 21, **dadurch gekennzeichnet, daß** die Analysiereinrichtung (92, 94) eine Einrichtung (92) zum Speichern einer Füllsignatur (120), die einer akzeptablen Baugruppe entspricht, und eine Einrichtung (94) zum Vergleichen der gespeicherten Füllsignatur mit der erzeugten Füllsignatur (116) aufweist.

23. Vorrichtung nach Anspruch 17, **dadurch gekennzeichnet, daß** der Meßwandler (86) während der Evakuierung der Druckkammer wirksam ist, um eine Gruppe von Evakuierdruckständen zu erzeugen, und während des Füllens der Druckkammer wirksam ist, um eine Gruppe von Fülldruckständen zu erzeugen;
die Erzeugungseinrichtung (90) wirksam ist, um eine Evakuiersignatur (114) als Antwort auf den Empfang der Gruppe von Evakuierdruckständen zu erzeugen, und wirksam ist, um eine Füllsignatur (116) als Antwort auf den Empfang der Gruppe von Fülldruckständen zu erzeugen;
die Speichereinrichtung (92) eine akzeptable Evakuiersignatur (118) und eine akzeptable Füllsignatur (120) speichert, und die Vergleichseinrichtung (94) wirksam ist, um die erzeugte Evakuiersignatur mit der gespeicherten Evakuiersignatur zu vergleichen und die erzeugte Füllsignatur mit der gespeicherten Füllsignatur zu vergleichen.

24. Vorrichtung nach irgendeinem der Ansprüche 14 bis 23, **dadurch gekennzeichnet, daß** die Vorrichtung ferner einen Drucker (96) enthält; die Analysiereinrichtung (92, 94) als Antwort auf ein Nichtzusammenpassen zwischen der erzeugten Signatur (114, 116) und der gespeicherten Signatur (118, 120) wirksam ist, das einen bestimmten Defekt in der Baugruppe anzeigt, um ein Zurückweisungssignal zu erzeugen, das auf den bestimmten Defekt zwecks Übertragung an den Drucker codiert ist; und der Drucker als Antwort auf den Empfang des codierten Zurückweisungssignals wirksam ist, um ein Etikett (124) zu drucken, das auf den bestimmten identifizierten Defekt codiert ist.

## Revendications

1. Procédé de test de l'intégrité d'un ensemble hydraulique (12) comportant une chambre hydraulique, le procédé étant **caractérisé en ce qu'**il comprend :
la modification graduelle de la masse de fluide dans la chambre ;
la prise de mesures indicatives de la pression dans la chambre à des instants successifs alors que la masse est modifiée, de telle manière que des lectures de pression successives soient générées ;
la création d'une signature (114, 116) à partir des lectures de pression ; et
la comparaison de la signature à une signature mémorisée connue d'un ensemble satisfaisant (118, 120), de telle manière que l'intégrité de l'ensemble en cours de test soit déterminée.

2. Procédé selon la revendication 1, **caractérisé en ce que** l'étape de modification graduelle de la masse de fluide dans la chambre comprend l'évacuation de l'air de la chambre afin de réduire graduellement la pression dans la chambre.

3. Procédé selon la revendication 1, **caractérisé en ce que** l'étape de modification graduelle de la masse de fluide dans la chambre comprend le remplissage graduel de la chambre avec un fluide.

4. Procédé selon la revendication 1, **caractérisé en ce que** l'étape de modification graduelle de la masse de fluide dans la chambre comprend l'évacuation de l'air de la chambre afin de réduire graduellement la pression dans la chambre et, ensuite, le remplissage graduel de la chambre avec un fluide ; l'étape de prise de mesures indicatives de la pression dans la chambre à des instants successifs comprend l'enregistrement d'une mesure indicative de la pression dans la chambre à des instants successifs alors que le vide est fait dans la chambre et, ensuite, l'enregistrement d'une mesure indicative de la pression dans la chambre à des instants successifs alors que la chambre est remplie ;
l'étape de création d'une signature à partir des mesures de pression comprend la création d'une signature de vide (114) alors que le vide est fait dans la chambre et la création d'une signature de remplissage (116) alors que la chambre est ensuite remplie ; et
l'étape de comparaison de la signature à une signature mémorisée connue comprend la comparaison de la signature de vide (114) à une signature de vide mémorisée connue (118) et, ensuite, la comparaison de la signature de remplissage (116) à une signature de remplissage mémorisée connue.

5. Procédé selon la revendication 4, dans lequel le test est arrêté avant l'étape de remplissage de la chambre avec un fluide si la comparaison entre la signature de vide (114) et la signature de vide mémorisée connue (118) indique un défaut dans l'ensemble en cours de test.

6. Procédé selon la revendication 4 ou 5, dans lequel la comparaison entre la signature de vide (114) et la signature de vide mémorisée connue (118) est effectuée périodiquement pendant que le vide est fait dans la chambre et la comparaison entre la signature de remplissage (116) et la signature de remplissage mémorisée connue (120) est effectuée périodiquement pendant le remplissage de la chambre, le test étant arrêté à un instant auquel l'une quelconque de ces comparaisons périodiques indique un défaut dans l'ensemble en cours de test.

7. Procédé selon l'une quelconque des revendications 1 à 6, **caractérisé en ce que** l'ensemble hydraulique (12) comprend un dispositif hydraulique comprenant un vérin hydraulique (14, 24).

8. Procédé selon la revendication 7, **caractérisé en ce que** le vérin hydraulique comprend un vérin maître (14) et l'ensemble comprend, de plus, un vérin esclave (24) et un conduit (32) reliant le vérin maître et le vérin esclave.

9. Procédé selon l'une quelconque des revendications précédentes, **caractérisé en ce que** l'ensemble hydraulique (12) comprend un système de commande d'embrayage hydraulique pour un véhicule automobile.

10. Procédé selon les revendications 8 et 9, **caractérisé en ce que** le vérin maître (14) comprend une tige de poussée (22) en association fonctionnelle avec une pédale d'embrayage du véhicule automobile, et le cylindre esclave (24) comprend une tige de poussée (30) en association fonctionnelle avec une fourchette de débrayage pour la butée de débrayage de l'embrayage du véhicule automobile.

11. Procédé selon l'une quelconque des revendications 1 à 10, **caractérisé par** l'introduction de l'étape de génération d'un signal de rejet en réponse à un défaut de correspondance entre la signature créée et la signature mémorisée.

12. Procédé selon la revendication 11, **caractérisé en ce que** le signal de rejet est codé de manière à indiquer un défaut spécifique de l'ensemble qui a provoqué le défaut de correspondance des signatures.

13. Procédé selon la revendication 12, **caractérisé en ce que** le signal de rejet codé est transmis à une imprimante associée (96) afin d'imprimer une étiquette codée pour le défaut identifié spécifique.

14. Dispositif (10) pour tester l'intégrité d'un ensemble hydraulique (12) comportant une chambre hydraulique, le dispositif étant **caractérisé en ce qu'**il comprend :
des moyens (38, 40) pour modifier graduellement la masse de fluide dans la chambre ;
un transducteur (86) opérationnel pour détecter une pression indicative de la pression dans la chambre et pour générer un signal de sortie proportionnel à la pression détectée ;
des moyens (90) opérationnels en réponse à la réception du signal de sortie du transducteur pour générer une signature (114, 116) représentative des variations de pression dans la chambre alors que la masse est modifiée ; et des moyens (92, 94) opérationnels pour analyser la signature comprenant des moyens (92) mémorisant une signature (118, 120) correspondant à un ensemble acceptable et des moyens (94) pour comparer la signature mémorisée à la signature générée.

15. Dispositif selon la revendication 14, dans lequel les moyens pour modifier la masse de fluide dans la chambre comprennent une source de vide (38).

16. Dispositif selon la revendication 14 ou 15, dans lequel les moyens pour modifier la masse de fluide dans la chambre comprennent une source de fluide sous pression (40).

17. Dispositif selon la revendication 16 lorsqu'elle dépend de la revendication 15, comprenant, de plus, un conduit (36) comportant une extrémité libre (36b) pour le raccordement à un orifice communiquant avec la chambre hydraulique de l'ensemble hydraulique (12) et une seconde extrémité (36c) ; des moyens de commutation (50, 52, 76) opérationnels pour, de manière sélective, raccorder la source de vide (38) à la seconde extrémité du conduit tout en bloquant la communication entre la source de fluide (40) et la seconde extrémité du conduit, de telle manière que le vide soit fait dans la chambre hydraulique, ou raccorder la source de fluide à la seconde extrémité du conduit tout en bloquant la communication entre la source de vide et la seconde extrémité du conduit, de telle manière que la chambre hydraulique soit remplie de fluide.

18. Dispositif selon la revendication 16 ou la revendication 17, dans lequel le fluide sous pression est le fluide de travail de l'ensemble.

19. Dispositif selon l'une quelconque des revendications 16 à 18, **caractérisé en ce que** la source de fluide (40) comprend un vérin de remplissage (58) et des moyens (60, 62, 64, 66) opérationnels pour éjecter le fluide du vérin de remplissage afin de remplir la chambre hydraulique de l'ensemble hydraulique.

20. Dispositif selon la revendication 19, **caractérisé en ce que** les moyens d'éjection (60, 62, 64, 66) comprennent une tige (66) capable d'être déplacée linéairement pendant l'éjection du fluide du vérin de remplissage ; et le dispositif comprend, de plus, un codeur (68) détectant le déplacement linéaire de la tige et opérationnel pour déclencher une lecture du signal de sortie du transducteur à la fin de chaque incrément prédéterminé de déplacement de la tige.

21. Dispositif selon la revendication 20, **caractérisé en ce que** les moyens de génération de signature (90) génèrent une signature de remplissage (116) représentative des variations de pression dans la chambre pendant le remplissage de la chambre hydraulique en réponse au signal du transducteur tel que déclenché par le codeur.

22. Dispositif selon la revendication 21, **caractérisé en ce que** les moyens d'analyse (92, 94) comprennent des moyens (92) mémorisant une signature de remplissage (120) correspondant à un ensemble acceptable et des moyens (94) pour comparer la signature de remplissage mémorisée à la signature de remplissage générée (116).

23. Dispositif selon la revendication 17, **caractérisé en ce que** le transducteur (86) est opérationnel pendant que le vide est fait dans la chambre hydraulique pour produire un ensemble de mesures de pression de vide et opérationnel pendant le remplissage de la chambre hydraulique pour produire un ensemble de mesures de pression de remplissage ;
les moyens de génération (90) sont opérationnels pour générer une signature de vide (114) en réponse à la réception de l'ensemble de mesures de pression de vide et opérationnels pour générer une signature de remplissage (116) en réponse à la réception de l'ensemble de mesures de pression de remplissage ;
les moyens de mémorisation (92) mémorisent une signature de vide acceptable (118) et une signature de remplissage acceptable (120) et les moyens de comparaison (94) sont opérationnels pour comparer la signature de vide générée à la signature de vide mémorisée et pour comparer la signature de remplissage générée à la signature de remplissage mémorisée.

24. Dispositif selon l'une quelconque des revendications 14 à 23, **caractérisé en ce que** le dispositif comprend, de plus, une imprimante (96) ; les moyens d'analyse (92, 94) sont opérationnels, en réponse à un défaut de correspondance entre la signature générée (114, 116) et la signature mémorisée (118, 120), indicatif d'un défaut spécifique de l'ensemble, pour générer un signal de rejet codé pour le défaut spécifique destiné à être transmis à l'imprimante ; et l'imprimante est opérationnelle en réponse à la réception du signal de rejet codé pour imprimer une étiquette (124) codée pour le défaut identifié spécifique.
